# EUROPEAN PATENT APPLICATION

(11) **EP 3 713 204 A1**
(43) Date of publication of application: **23.09.2020**
(21) Application number: 18879627.0
(22) Date of filing: 14.11.2018
(51) Int. Cl.: H04M 11/00, G06F 21/31, G06F 21/44, G07G 1/12, H04L 29/08, H04M 1/00, H04W 12/06, H04W 84/10, H04W 84/12

(54) **COMMUNICATION AUTHENTICATION APPARATUS AND COMMUNICATION SYSTEM COMPRISING SAME**

(30) Priority: 14.11.2017 JP 2017219542
(71) Applicant: Conol Inc., Tokyo 102-0083 (JP)
(72) Inventor: MIZOTA, Takaaki, Tokyo 102-0083 (JP); OKADA, Tetsuya, Nagoya-shi Aichi 452-0801 (JP)
(74) Representative: Wittmann, Günther
(86) International application number: PCT/JP2018/042195
(87) International publication number: WO 2019/098253

(57) **Abstract**

Provided are a communication authentication apparatus and a communication system that enable authentication for easily and safely connecting a communication device to an access point, and improvement of convenience and safety by appropriately controlling communication with the communication device. The communication authentication apparatus (10) for performing authentication for connecting the communication device (20) to the access point (40) of a wireless LAN includes an NFC unit (12) having a function of authentication by performing communication using NFC with the communication device (20) by proximity or contact with the communication device (20), and a power supply circuit (13). When the power supply circuit (13) is in a completely power-off state or a power-saving state, the communication authentication apparatus (10) controls to start up the power supply circuit (13) from the complete power-off state or the power-saving state in response to communication with the communication device (20) in the NFC unit (12).

## Description

### [Technical field]

The present invention relates to a communication authentication apparatus that includes a communication unit having a function of performing wireless communication in a state of being close, and authenticates a communication device in the communication unit. The present invention also related to a communication system including the communication authentication apparatus.

In order to connect a terminal device including a wireless communication function, such as a smartphone, a tablet terminal and a PC, to a wireless LAN environment (namely, access point or AP), the security of the wireless LAN environment can be ensured by connecting only a specific authenticated terminal device. Conventionally, this authentication procedure is performed by inputting authentication information, such as an ID and a password for permitting connection to the access point set in advance, to the terminal device (for example, see Patent Document 1). However, there has been a problem that the terminal device cannot be connected to the wireless LAN environment until after such authentication procedure is performed, or in other words, for example, in a store such as a restaurant or a retail store, or in a guest room or a lobby of a hotel, the terminal device cannot be used simply by connecting to the wireless LAN environment.

Further, in the wireless LAN in a restaurant for example, it is convenient if a visitor (customer) can order a product or a service by operating their wireless device such as a smartphone connected to the access point of the wireless LAN. However, in that case, in order to appropriately manage the visitor's order, it is necessary to construct a system that can appropriately process the order placed from the smartphone or the like.

Further, in the wireless LAN environment in the store such as the restaurant or the retail store, or in the guest room or the lobby of the hotel as described above, it may be necessary to limit connection time or the number of times of connection of the terminal device to the access point. There is also a demand for grasping a history of a specific terminal device connected to the access point in the past and changing content to be displayed on a display screen of the terminal device in accordance with the history. Therefore, it is necessary to efficiently control the connection of the terminal device to the access point.

### [RELATED ART DOCUMENTS]

### [PATENT DOCUMENTS]

[Patent Document 1] Japanese Unexamined Patent Application Publication No. 2001-345819

### [Disclosure of the Invention]

### [Problems to be Solved by the Invention]

The present invention has been made in view of the above points, and an object of the present invention is to provide a communication authentication apparatus and a communication system that can perform authentication for connecting a communication device to an access point easily and safely, and improve convenience and security by appropriately controlling communication with the communication device.

### [Means for Solving the Problems]

In order to solve the above problems, a communication authentication apparatus according to the present invention is a communication authentication apparatus (10) that performs authentication for connecting a communication device (20) to an access point (40) of a wireless LAN. The communication authentication apparatus includes an NFC unit (12) having a function of performing authentication for connecting the communication device (20) to the access point (40) by performing communication using NFC with the communication device (20) by proximity or contact of the communication device (20). The communication authentication apparatus also includes a control unit (11, 14) for controlling the NFC unit (12), and a power supply circuit (13) for supplying power to a system of the communication authentication apparatus (10) including the NFC unit (12) and the control unit (11, 14). The control unit (11, 14) characteristically performs control to start the power supply circuit (13) from a complete power-off state or a power-saving state in response to communication performed with the communication device (20) in the NFC unit (12) when the power supply circuit (13) is in the complete power-off state or the power saving-state.

The above-configured communication authentication apparatus in accordance with the present invention includes the NFC unit having the function of performing authentication for connecting the communication device, such as a smart phone and a mobile PC, to the access point of the wireless LAN by performing communication with the communication device using NFC by proximity or contact of the communication device. This enables authentication for easily and safely connecting the communication device to the access point.

Further, this communication authentication apparatus performs control to start the power supply circuit from the complete power-off state or the power-saving state in response to communication with the communication device in the NFC unit when the power supply circuit is in the complete power-off state or the power-saving state. This enables to start the power supply circuit of the communication authentication apparatus only when necessary and then supply power. Accordingly, power consumption of the communication authentication apparatus can be effectively reduced. In addition, the power supply circuit is configured to start in response to the communication in the NFC unit. This enables quick and reliable authentication of the communication device.

Moreover, the present invention is a communication system (100) including a communication device (20) and a communication authentication apparatus (10) that performs authentication for connecting the communication device (20) to an access point (40) of a wireless LAN. The communication device (20) includes a storage unit (25) that stores an application having a function of receiving authentication by the communication authentication apparatus (10) and a display section (26) that performs a display related to the application. The communication authentication apparatus (10) includes an NFC unit (12) having a function of performing authentication for connecting the communication device (20) to the access point (40) by performing communication with the communication device (20) using NFC by proximity or contact of the communication device (20). The communication system (100) is characterized in that the communication authentication apparatus (10) performs authentication for connecting the communication device (20) to the access point (40) by communicating with the communication device (20) using NFC by proximity or contact of the communication device (20), and the authenticated communication device (20) displays on the display unit (26), authentication information of the access point (40) to which the communication device (20) is connected or image data including the authentication information. Here, the image data including the authentication information may be, for example, a barcode or a two-dimensional code including the authentication information.

According to the communication system having of the above-described configuration according to the present invention, the display section is configured to display the authentication information of the access point to which the communication device is connected or the image data including the authentication information (for example, two-dimensional code image data). This enables authentication for connecting another additional communication device to the access point by using the display of the authentication information or the image data including the authentication information. In other words, for example, when the authentication information (such as an ID and a password for authentication) is displayed on the display unit of the authenticated communication device, the other communication device can be authenticated by inputting the authentication information display to the other communication device. In addition, when the image data including authentication information is displayed on the display unit, the other communication device can be authenticated by capturing the image data using an imaging means of the other communication device. Therefore, the connection of the other communication device to the access point can be securely authenticated through a simple procedure.

In this case, the authentication information itself of the access point (40) or the image data including the authentication information should be displayed for a predetermined period of time. This predetermined period of time in this case can be, for example, approximately 60 to 120 seconds. Thus, by limiting the display time to the predetermined period of time, the authentication information can be protected.

Furthermore, the present invention is a communication system (100) including a communication device (20) and a communication authentication apparatus (10) that performs authentication of data transmitted from the communication device (20). The communication authentication apparatus (10) includes a first communication unit (12) having a function of performing authentication of data transmitted from the communication device (20) by communicating with the communication device (20) using NFC by proximity or contact of the communication device (20), and a second communication unit (18) that performs another wireless communication using a communication method different from the first communication unit (12). The first communication unit (12) of the communication authentication apparatus (10) authenticates the data sent from the communication device (20) by performing communication using NFC with the communication device (20) by proximity or contact of the communication device (20). The communication system is configured so that the data transmitted from the communication device (20) authenticated by the communication authentication apparatus (10) is transmitted to another receiving communication device (70) via the second communication unit (18) of the communication authentication apparatus (10). In this case, the data may be transmitted from the second communication unit (18) to the other receiving communication device (70) via a server (50) on a communication network (W) and the like, or may be directly transmitted from the second communication unit (18) to the other receiving communication device (70) without passing through the server (50).

The communication system of the above-described configuration according to the present invention is configured so that the data transmitted from the communication device authenticated by the communication authentication apparatus is transmitted to the other receiving communication device via the second communication unit of the communication authentication apparatus. This enables transmission only of the information permitted by the communication authentication apparatus among the data transmitted from the communication device to the other communication device. In other words, for example, in a store such as a restaurant, a visitor (customer) of the store inputs information regarding an order by operating their communication device such as a smartphone. In that case, the data related to the order can be transmitted to a computer of a store operator, which is the receiving communication device in the store, only when the visitor brings the communication device close to or into contact with the communication authentication apparatus. Further, since the data transmitted from the smartphone at this time is transmitted to the store operator's computer or the like via the communication authentication apparatus, if the transmitted data has been falsified, the data can be prevented from being transmitted, or the data can be transmitted after being appropriately corrected. As a result, the visitor can safely and reliably place orders from their own smartphones, etc., and the store operator can safely and properly receive orders from the visitor's smartphone or the like.

Further, the present invention is a communication system including a communication device (20) and a communication authentication apparatus (10) for performing authentication of data transmitted from the communication device (20). The communication authentication apparatus (10) includes a first communication unit (12) having a function of performing authentication of the data transmitted from the communication device (20) by performing communication using NFC with the communication device by proximity or contact of the communication device (20), and a second communication unit (18) for performing another wireless communication using a communication method different from the first communication unit (12). The first communication unit (12) of the communication authentication apparatus (10) performs authentication of data transmitted from the communication device (20) by performing communication with the communication device (20) using the NFC with the communication device (20) by proximity or contact of the communication device (20). The communication device (20) authenticated by the communication authentication apparatus (10) transmits information indicating that the authentication has been completed to the server (50) via a communication network (W), thereby receiving key data (85) of a locking device (80) from the server (50). And then, the received key data (85) is transmitted to the locking device (80) using communication by the second communication unit (18), thereby locking/unlocking the locking device (80).

According to the communication system of the above configuration according to the present invention, the locking device can be locked/unlocked using the communication device authenticated by the communication authentication apparatus. This enables a user of a facility such as a store themselves to open and close a door of the facility where the communication authentication apparatus is installed, which can improve the convenience of the facility such as the store. It should be noted that the bracketed reference numerals are examples of the elements of the embodiment described later.

### [Effects of the Invention]

The communication authentication apparatus and the communication system including the same according to the present invention can easily and safely perform authentication for connecting a communication device to an access point, and improve the convenience and safety of the communication system by appropriately controlling communication with the communication device.

### [Brief Description of the Drawings]

FIG. 1 is a diagram illustrating an example of an overall configuration of a communication system including a communication authentication apparatus according to an embodiment of the present invention;
FIG. 2 is a block diagram illustrating a functional configuration of a communication authentication apparatus and a smartphone (communication device);
FIG. 3 is a flowchart illustrating a flow of processing performed by a communication authentication apparatus on a smartphone of a store operator;
FIG. 4 is a diagram illustrating a processing procedure for setting information of a wireless LAN installed in a store on a communication authentication apparatus;
FIG. 5 is a flowchart showing a processing flow until an initial display screen is displayed by an application installed in a smartphone in advance;
FIG. 6 is a flowchart showing a flow of an authentication procedure performed by a smartphone application;
FIG. 7 is a flowchart illustrating a flow of an authentication procedure (when authenticating only a smartphone) between a communication authentication apparatus and the smartphone;
FIG. 8 is a flowchart showing a flow of an authentication procedure between a communication authentication apparatus and a smartphone (when authenticating a smartphone and then authenticating another communication device);
FIG. 9A is a diagram illustrating a procedure of touching a smartphone (a smartphone before authentication) to a communication authentication apparatus to perform authentication;
FIG. 9B is a diagram illustrating a procedure for transferring authentication information from an authenticated smartphone to another unauthenticated communication device;
FIG. 10 is a flowchart illustrating a process in which a visitor (customer) of a store sends order information on, for example, a product to a computer of a store operator using their smartphone;
FIG. 11 is a diagram for illustrating a procedure in which a smartphone acquires key data of a locking device from a server;
FIG. 12 is a diagram for illustrating a procedure of unlocking a locking device with a smartphone;
FIG. 13 is a flowchart showing a flow from when a smartphone acquires key data of a locking device from a server and unlocks the locking device with the acquired key data; and
FIG. 14 is a diagram illustrating a procedure of selecting and setting a function that is settable in a communication authentication apparatus managed by an administrator of the communication authentication apparatus.

### [Mode for Carrying out the Invention]

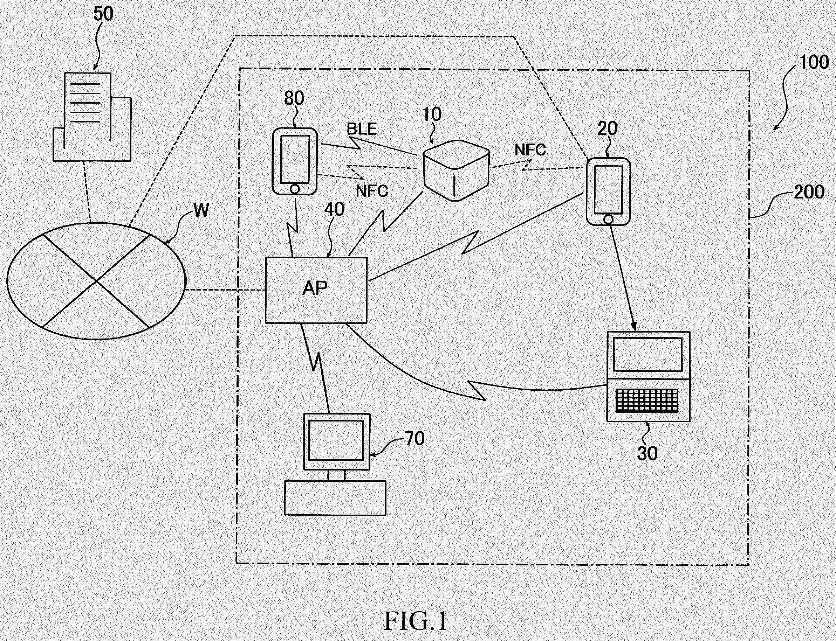

Hereinafter, embodiments of the present invention will be described in detail with reference to the accompanying drawings. FIG. 1 is a diagram illustrating an example of a whole configuration of a communication system including a communication authentication apparatus according to an embodiment of the present invention. As shown in FIG. 1, a communication system 100 according to the present embodiment is configured to include a wireless LAN access point 40 installed, for example, in a store 200 such as a restaurant, a computer (communication device) 70 owned by a store operator being in the store 200, a smartphone (communication device) 80 also owned by the store operator being in the store 200, a communication authentication apparatus 10 disposed in the store 200, and a smartphone 20 and a PC 30 that are communication devices owned by a visitor (customer) who has visited the store 200. The communication authentication apparatus 10 is a device that can perform communication with a communication device such as the smartphone 20 by NFC (Near Field Communication) communication method that performs wireless communication being kept close to or in contact with the communication device. The communication system 100 is configured so that the communication authentication apparatus 10 authenticates a communication device such as the smartphone 20 of the visitor (hereinafter, simply referred to as "smartphone 20") via NFC communication, thereby establishing a connection to the access point 40 such as the PC 30 that is another communication device. In other words, the communication system 100 is configured so that when the authentication procedure is completed through NFC wireless communication between the communication authentication apparatus 10 and the smartphone 20, the smartphone 20 and the PC 30 can be connected to the access point 40 of the wireless LAN.

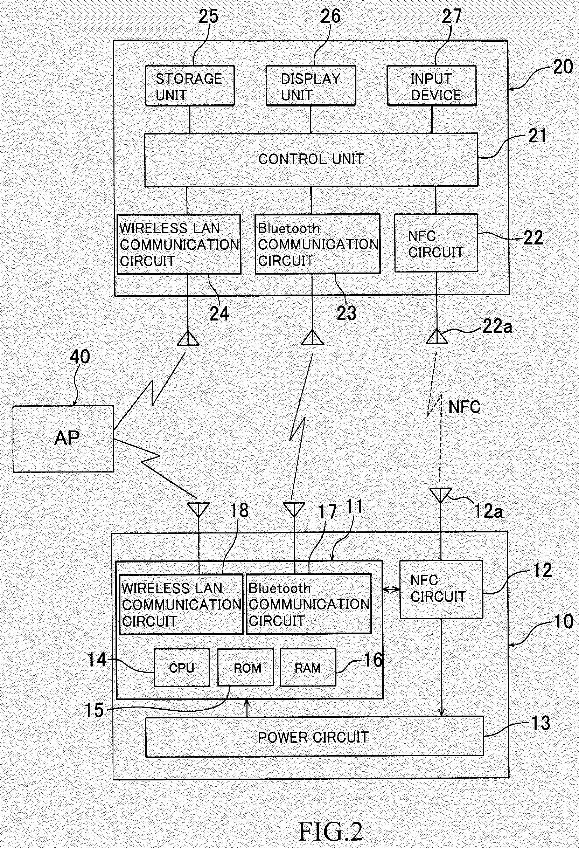

FIG. 2 is a block diagram illustrating functional configurations of the communication authentication apparatus 10 and the smartphone 20. The functional configurations of the communication authentication apparatus 10 and the smartphone 20 included in the communication system 100 will be described with reference to the same figure. In the following, while the configuration of the smartphone 20 of the visitor will be described as an example, the smartphone 80 of the store operator has the same configuration.

The communication authentication apparatus 10 includes a microcomputer module 11, an NFC circuit (first communication unit) 12 and a power supply circuit 13. Further, the microcomputer module 11 includes a CPU (control unit) 14 that controls each unit constituting the communication authentication apparatus 10, a ROM 15 and a RAM 16, which are storage means for storing data, and a Bluetooth (registered trademark) communication circuit (second communication unit) 17, and a wireless LAN communication circuit 18. The NFC circuit 12 includes a sensor unit 12a for communication with the outside, and is configured to enable NFC wireless communication with the smartphone 20 via the sensor unit 12a. The Bluetooth communication circuit 17 is configured to enable wireless communication with the smartphone 20 using the Bluetooth communication method. The wireless LAN communication circuit 18 is configured to enable wireless communication with a wireless LAN access point (AP) 40 using a wireless LAN communication method such as the Wi-Fi standard.

The smartphone 20 includes a CPU (control unit) 21 that controls each unit constituting the smartphone 20, an NFC circuit 22, a Bluetooth communication circuit 23, a wireless LAN communication circuit 24, a storage unit 25 that stores various data, a display unit 26 that outputs image information and an input device 27 such as a touch panel. The NFC circuit 22 includes a sensor unit 22a for communication with the outside, and is configured to enable wireless communication by NFC with the NFC circuit 12 of the communication authentication apparatus 10 via the sensor unit 22a. The Bluetooth communication circuit 23 is configured to enable wireless communication with the Bluetooth communication circuit 17 of the communication authentication apparatus 10 using the Bluetooth communication method. The wireless LAN communication circuit 24 is configured to enable wireless communication with the communication authentication apparatus 10 and with the wireless LAN access point 40 using a wireless LAN communication method such as the Wi-Fi standard.

Further, an application software that performs an authentication procedure with the communication authentication apparatus 10 by NFC wireless communication and connects to a wireless LAN access point based on this authentication is installed on the smartphone 20. This application software should be downloaded and installed from a website or the like stored in the server 50 that provides the application software by connecting the smartphone 20 to the Internet (communication network) W (see FIG. 1) in advance.

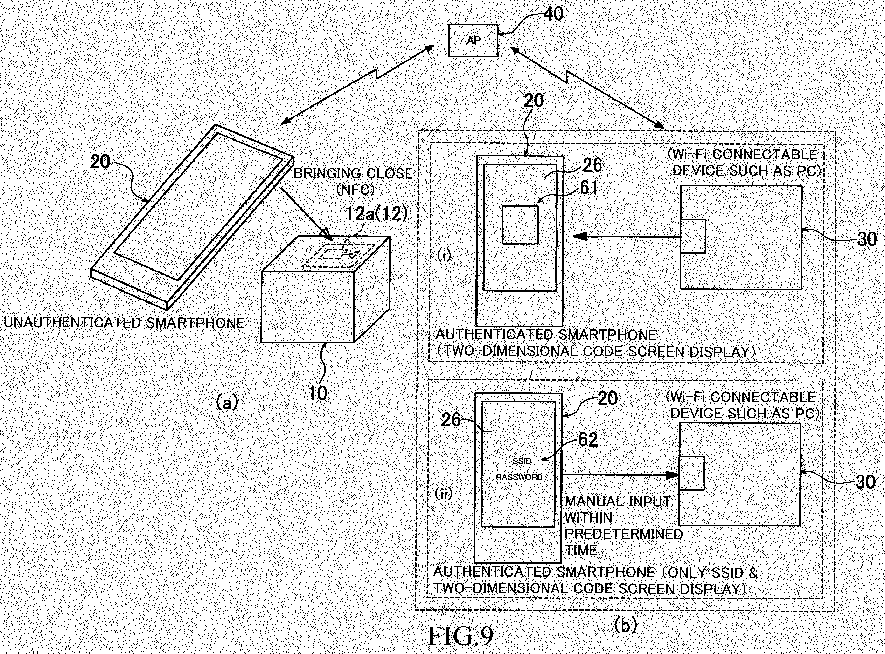

Here, the communication by the above-described NFC is a wireless communication technology that enables communication when two devices are in close proximity (separated from several cm to several tens of cm) or in contact with each other. (Hereinafter, both "close proximity" and "contact" may be collectively referred to as "proximity" or "close".) Therefore, the NFC circuit 22 of the smartphone 20 is configured so as to enable the NFC wireless communication with the communication authentication apparatus 10 when arranged close to the NFC circuit 12 of the communication authentication apparatus 10. More specifically, as shown in FIG. 9A, the smartphone 20 and the communication authentication apparatus 10 perform communication with each other by bringing the body of the smartphone 20 into contact with (or holding up the smartphone 20 over) the sensor unit 12a of the NFC circuit 12 provided on the surface of the communication authentication apparatus 10. (Hereinafter, this may be referred to as "NFC touch".) In addition, the communication using the wireless LAN communication method and the Bluetooth communication method is a wireless communication technology applied when two devices are separated from each other by several meters to several tens of meters. Compared with the NFC communication, this technology enables communication even when the two devices are separated by a longer distance.

Here, a processing procedure of establishing BLE (Bluetooth Low Energy) communication by an NFC touch performed between the communication authentication apparatus 10 and the smartphone 80 of the store operator will be described. The processing of establishing the BLE communication is mainly performed on the smartphone 80 of the store operator, which is a terminal for performing (initial) setting of the communication authentication apparatus 10 and the like. This processing can be also performed to another communication device such as the visitor's smartphone 20.

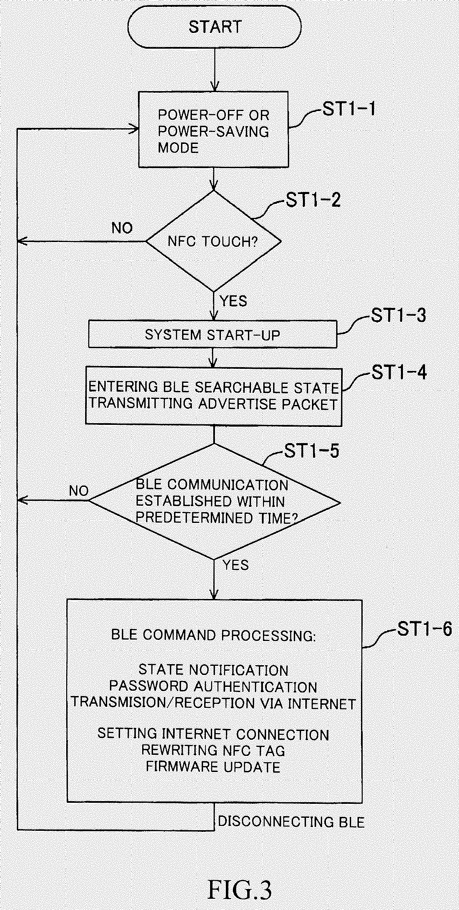

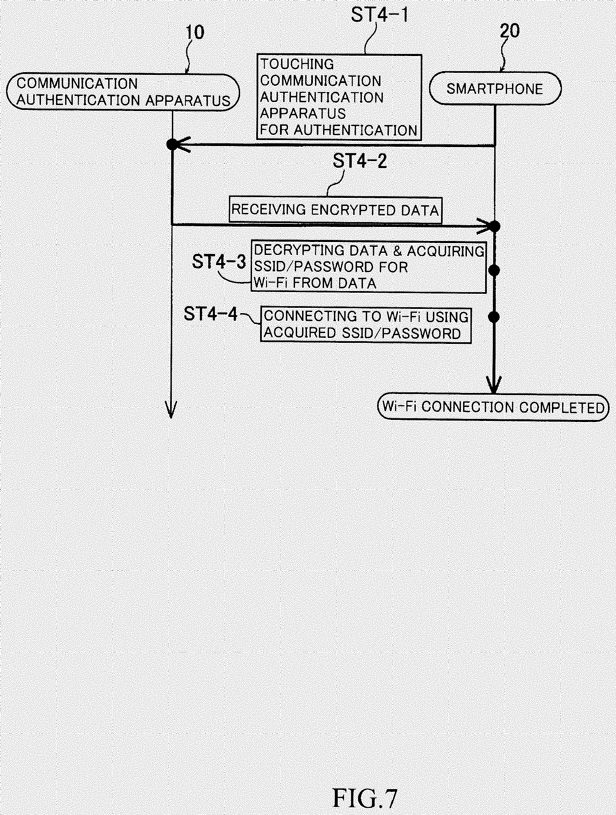

FIG. 3 is a flowchart illustrating a flow of processing performed by the communication authentication apparatus 10 on the smartphone 80 of the store operator. As shown in the flowchart of FIG. 7, the processing is performed in a state where the communication authentication apparatus 10 is powered off or in the power-saving mode (ST1-1). Here, the case in which the communication authentication apparatus 10 is powered off or in the power-saving mode will be described. However, this processing can be performed even when the communication authentication apparatus 10 is powered on. Subsequently, it is determined whether or not there is an NFC touch of the smartphone 80 (ST1-2). As a result, if there is no NFC touch of the smartphone 80 (NO), the processing returns to ST1-1. If there is an NFC touch of the smartphone 80 (YES), a system (power supply circuit 13) of the communication authentication apparatus 10 starts up accordingly (ST1-3). As described above, in the communication authentication apparatus 10 of the present embodiment, in response to the communication with the smartphone 80 in the NFC unit 12 when the power supply circuit 13 is in the complete power-off state or the power-saving state, the power supply circuit 13 can be controlled to start from the complete power-off state or the power-saving state.

Thereafter, when the communication authentication apparatus 10 enters a BLE searchable state, the communication authentication apparatus 10 transmits a BLE advertisement packet (ST1-4). Here, the BLE advertisement packet includes a unique ID of an NFC chip. Then, the smartphone 80 that has touched the communication authentication apparatus 10 performs authentication by reacting only to the advertisement packet that matches the ID of the communication authentication apparatus 10 obtained from NFC. As a result, it is determined whether BLE communication can be established within a predetermined period of time (for example, 10 seconds) (ST1-5). As a result, if the BLE communication cannot be established within the predetermined period of time (NO), the processing returns to ST1-1. If the BLE communication can be established within the predetermined period of time (YES), a command processing (BLE command processing) by BLE communication is performed (ST1-6). In this BLE command processing, for example, processing of status notification, password authentication and network transmission/reception are performed.
Further, as processings involving the password authentication, processings such as network connection setting (Wi-Fi information, server setting), rewriting of an NFC tag, and firmware updating are performed. Thereafter, the processing returns to step ST1-1 by disconnecting the BLT connection. By performing the processing illustrated in FIG. 3, the store operator can perform necessary setting and the like to the communication authentication apparatus 10 using a communication device such as the smartphone 80 owned by the store operator.

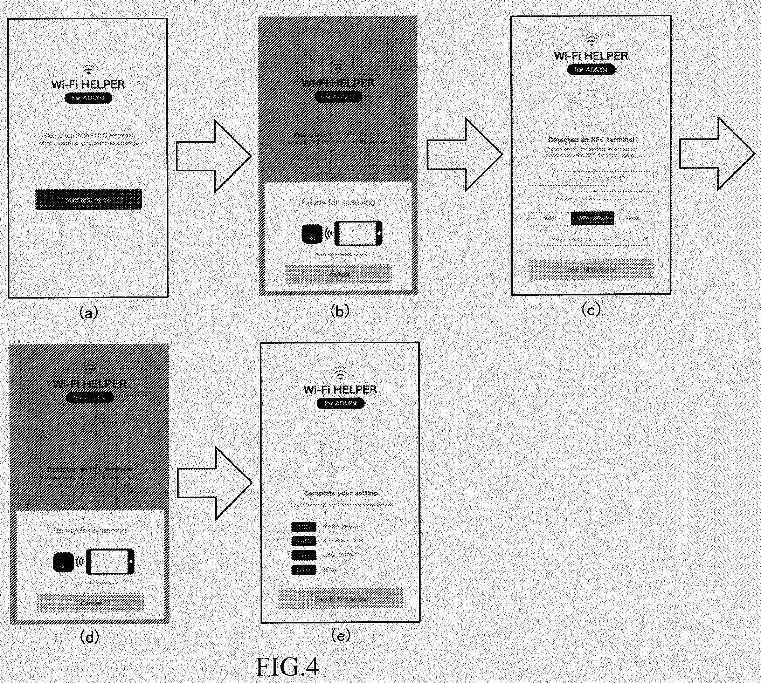

Next, as a preparation for performing the authentication procedure of the smartphone 20 using the communication authentication apparatus 10, a processing procedure for setting information of a wireless LAN (Wi-Fi or the like) being in a store to the communication authentication apparatus 10 will be described. Here, the case in which the store operator performs the processing using their smartphone 80 will be described. FIG. 4 is a diagram showing a screen display of the smartphone 80 when performing this processing. Here, the processing is performed using a function of the application for setting and management installed in advance on the smartphone 80 of the store operator. First, the initial screen of the application shown in FIG. 4A displays a prompt for starting up an NFC reader (NFC circuit). When the start-up of the NFC reader is instructed in accordance with this display, the NFC reader starts up as shown in FIG. 4B. In this state, the main body of the smartphone 80 is touched (or brought close) to the sensor unit 12a of the NFC circuit 12 of the communication authentication apparatus 10. As a result, the communication authentication apparatus 10 is detected by the application of the smartphone 80, and a display screen as illustrated in FIG. 4C is displayed on the display unit (display screen) of the smartphone 80. On this screen, information necessary for setting of the communication authentication apparatus 10 (here, an SSID (Service Set Identifier) of the wireless LAN being in the store, a password, a communication method, and setting time period information) is input. When the input is completed, the display screen again displays a prompt for starting up the NFC reader. When the start-up of the NFC reader is instructed according to this display, the NFC reader starts up as shown in FIG. 4D. In this state, the smartphone 80 is touched (or brought close) to the sensor unit 12a of the NFC circuit 12 of the communication authentication apparatus 10. As a result, the information input to the smartphone 80 is transmitted to the communication authentication apparatus 10 as shown in FIG. 4E, thereby completing the setting of the communication authentication apparatus 10.

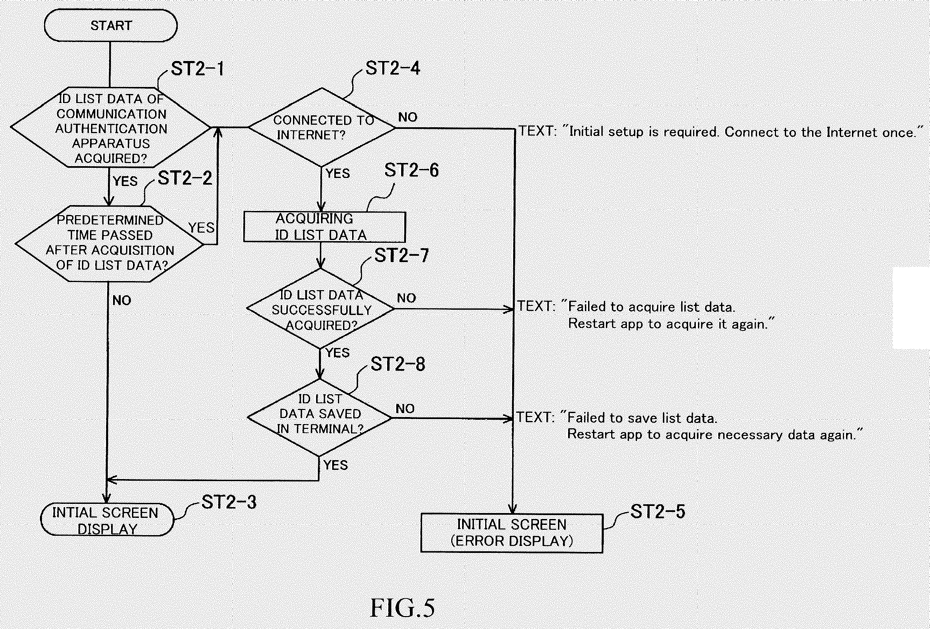

An authentication procedure of the smartphone 20 using the communication authentication apparatus 10 will be described. FIG. 5 is a flowchart illustrating a processing flow until an initial display screen is displayed on the display unit 26 with the application (application software) installed in the smartphone 20 in advance. Here, first, it is determined whether or not the smartphone 20 (application) has already acquired ID list data of the communication authentication apparatus 10 that authenticates connection (ST2-1). As a result, if the ID list data has been acquired (YES), it is determined whether or not a predetermined period of time has elapsed since the acquisition of the ID list data (ST2-2). The predetermined period of time here can be, for example, one hour. As a result, if the predetermined period of time has not elapsed (NO), the initial screen is displayed (ST2-3). On the other hand, if the ID list data has not been acquired in the previous ST2-1 (NO), or if a predetermined period of time has elapsed since the ID list data was acquired in the previous ST2-2 (YES), it is determined whether the smartphone 20 is connected to the Internet W (ST2-4). As a result, if the smartphone 20 is not connected to the Internet W (NO), the initial screen (error display) is displayed (ST2-5). The content (text) of the error display at this time should be, for example: "Initial setup is required. Please connect to the Internet once". On the other hand, if the smartphone 20 is connected to the Internet W in ST2-4 (YES), the ID list data is acquired from a target website via the Internet W (ST2-6). Thereafter, it is determined whether or not the acquisition of the ID list data has been successful (ST2-7). As a result, if the acquisition of the ID list data is not successful (NO), the initial screen (error display) is displayed (ST2-5). The content (text) of the error display at this time should be, for example: "Failed to acquire list data. Please restart app to acquire it again." On the other hand, if the acquisition of the ID list data is successful in ST2-7 (YES), subsequently, it is determined whether the ID list data has been saved (stored) in the storage unit 25 of the smartphone 20 (ST2-8). As a result, if the ID list data has not been stored (NO), the initial screen (error display) is displayed (ST2-5). The content (text) of the error display at this time should be, for example, "Failed to save list data. Restart app to acquire necessary data again." On the other hand, if the device ID list data has been stored in ST2-8 (YES), the initial screen is displayed (ST2-3).

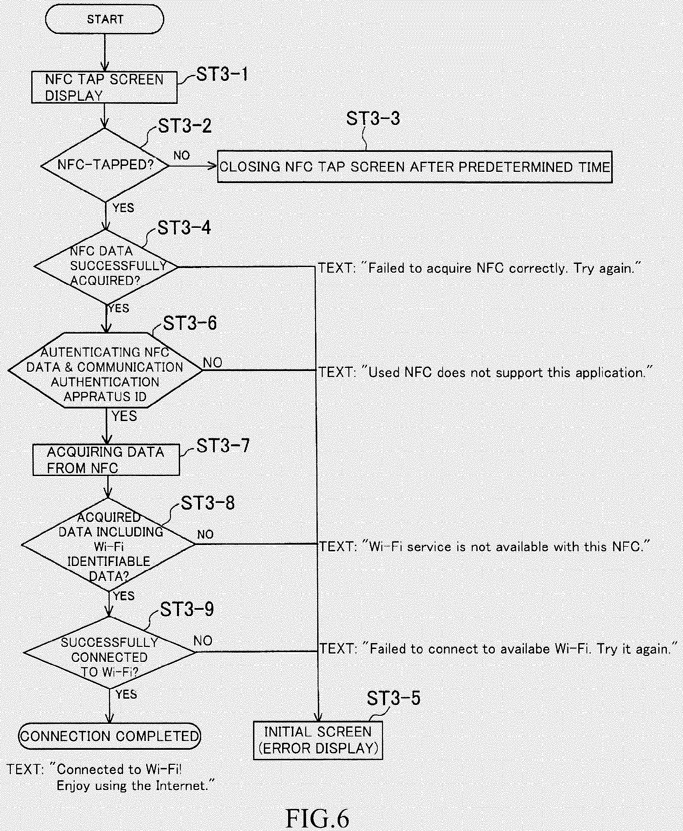

FIG. 6 is a flowchart illustrating a flow of an authentication procedure of the smartphone 20 using the communication authentication apparatus 10 (namely, processings from when an NFC start button is pressed until connecting to the wireless LAN). The flowchart of this figure shows a flow until the smartphone 20 connects to the access point 40 by operating the application installed in the smartphone 20 in advance. As shown in FIG. 6, first, the application on the smartphone 20 is started up so as to display an NFC tap screen (ST3-1). Thereafter, it is determined whether or not an NFC tap has been performed on the NFC tap screen (namely, the NFC start button has been pressed or not) (ST3-2). As a result, if the NFC tap has not been performed (NO), the NFC tap screen is closed after a lapse of a predetermined period of time (for example, about 60 seconds) (ST3-3). On the other hand, if the NFC tap has been performed in ST3-2 (YES), it is subsequently determined whether or not the acquisition of the NFC data has been successful (ST3-4). As a result, if the acquisition of the NFC data has not been successful (NO), an initial screen (error display) is displayed (ST3-5). The content (text) of the error display at this time should be, for example: "Failed to acquire NFC correctly. Try again." On the other hand, if it is determined in ST3-4 that the acquisition of the NFC data has been successful (YES), it is determined whether the NFC data and the ID of the communication authentication apparatus 10 can be authenticated or not (ST3-6). The authentication here is specifically performed by comparing the acquired NFC data and the ID with the list and then determining whether or not corresponding items are found on the list. As a result, if the NFC data and the ID cannot be authenticated (NO), the initial screen (error display) is displayed (ST3-5). The content (text) of the error display at this time should be, for example: "Used NFC does not support this application." On the other hand, if the NFC data and the device ID can be authenticated in ST3-6 (YES), the data from the NFC is subsequently acquired (ST3-7) so as to determine whether or not the acquired data includes data that can identify the Wi-Fi (such as JSON (JavaScript (registered trademark) Object Notation of the Wi-Fi) (ST3-8). As a result, when the information that can identify the Wi-Fi is not included (NO), the initial screen (error display) is displayed (ST3-5). The content (text) of the error display at this time should be, for example: "No Wi-Fi service can be used with this NFC." On the other hand, when the information that can identify Wi-Fi is included in ST3-8 (YES), it is subsequently determined whether or not the connection to Wi-Fi has been successful (ST3-9). As a result, if it is determined that the connection to Wi-Fi has not been successful (NO), the initial screen (error display) is displayed (ST3-5). The content (text) of the error display at this time should be, for example: "Failed to connect to available Wi-Fi. Try it again." On the other hand, if it is determined in ST3-9 that the connection to Wi-Fi has been successful (YES), the connection is completed.

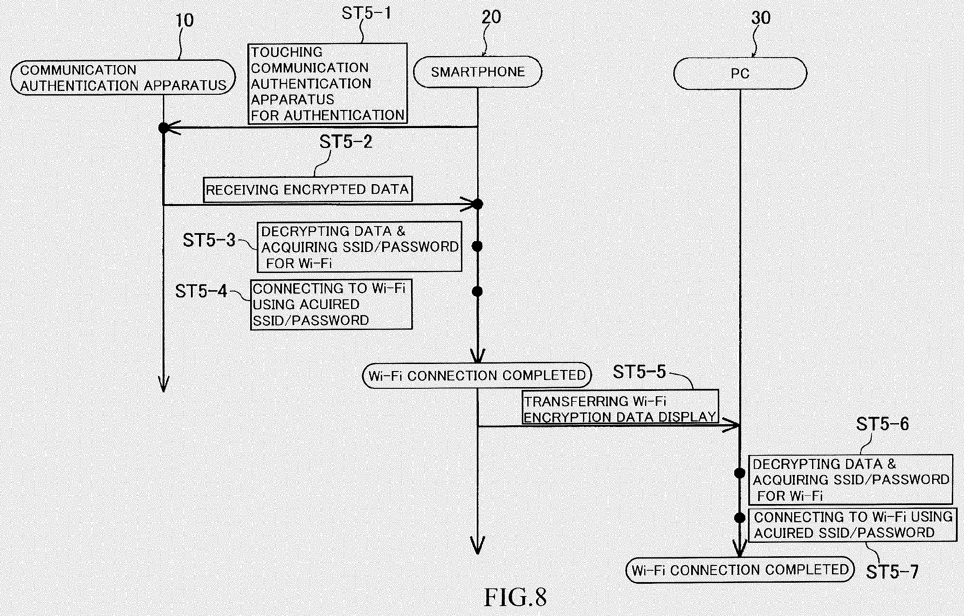

Next, FIGs. 7 and 8 are flowcharts illustrating the flow of an authentication procedure performed between the communication authentication apparatus 10 and the smartphone 20. FIG. 7 illustrates a case in which only the smartphone 20 is connected to the access point 40, and FIG. 8 is a flowchart showing a flow of a case in which the PC 30, which is another communication device, is further connected to the access point 40 after the smartphone 20 is connected.

In the flowchart of FIG. 7, first, the smartphone 20 is touched to the communication authentication apparatus 10 so as to perform authentication (ST4-1). Specifically, the NFC tap screen is displayed on the display unit 26 of the smartphone 20, and in this state, the main body of the smartphone 20 is touched (or brought close) to the sensor unit 12a of the NFC circuit 12 of the communication authentication apparatus 10. In this manner, the smartphone 20 is authenticated by the communication authentication apparatus 10. Also, at this time, in the communication authentication apparatus 10, even when the power supply circuit 13 is in the completely power-off state or the power-saving state, the power supply circuit 13 is controlled to start from the complete power-off state or the power-saving state in response to the communication with the smartphone 20 in the NFC unit.

Then, in response to the fact that the body of the smartphone 20 has been touched to the sensor unit 12a of the NFC circuit 12 of the communication authentication apparatus 10, encrypted data is transmitted from the communication authentication apparatus 10 to the smartphone 20 (ST4-2). After that, the smartphone 20 decrypts the received data, and acquires an SSID and a password for Wi-Fi from the decrypted data (ST4-3). Then, a connection to Wi-Fi is performed using the acquired SSID and password (ST4-4). Thus, the connection of the smartphone 20 to Wi-Fi is completed.

In the flowchart of FIG. 8, first, the smartphone 20 is touched to the communication authentication apparatus 10 so as to perform authentication (ST5-1). Specifically, an NFC tap screen is displayed on the display screen of the smartphone 20, and in this state, the main body of the smartphone 20 is touched (or brough close) to the sensor unit 12a of the NFC circuit 12 of the communication authentication apparatus 10. Thereby, the smartphone 20 is authenticated by the communication authentication apparatus 10. Also, at this time, in the communication authentication apparatus 10, even when the power supply circuit 13 is in the completely power-off state or the power-saving state, the power supply circuit 13 is controlled to start from the complete power-off state or the power-saving state.

Then, in response to the fact that the body of the smartphone 20 has been touched to the sensor unit 12a of the NFC circuit 12 of the communication authentication apparatus 10, encrypted data is transmitted from the communication authentication apparatus 10 to the smartphone 20 (ST5-2). Thereafter, the smartphone 20 decrypts the received data, and acquires an SSID and a password for Wi-Fi from the decrypted data (ST5-3). Then, a connection to Wi-Fi is performed using the acquired SSID and password (ST5-4). Thus, the connection of the smartphone to Wi-Fi is completed. The procedure up to this point are the same as that of ST4-1 to ST4-4 in FIG. 7.

Thereafter, Wi-Fi encryption information display for authentication is transferred from the smartphone 20 that is an authenticated communication device to the PC 30 that is another unauthenticated communication device (ST5-5). The procedure for transferring the encryption information display is performed specifically using a method shown in FIG. 9B, as will be described below. Thereafter, the PC 30 decrypts the received data and acquires the SSID and the password for Wi-Fi from the decrypted data (ST5-6). Then, a connection to Wi-Fi is performed using the acquired SSID and password (ST5-7). Thus, the connection of the PC to Wi-Fi is completed.

FIG. 9A is a diagram showing a procedure of authenticating the smartphone 20 (before authentication) by touching the communication authentication apparatus 10 (ST4-1 in FIG. 7 and ST5-1 in FIG. 8). FIG. 9B is a diagram showing a procedure of transferring the Wi-Fi encryption information display for authentication from the authenticated smartphone 20 to the unauthenticated PC 30 (step ST5-5 in FIG. 8). In the procedure illustrated in FIG. 9A, the smartphone 20 is authenticated by the communication authentication apparatus 10 by bringing the smartphone 20 before authentication close to the NFC circuit 12 (namely, the sensor unit 12 a) of the communication authentication apparatus 10. Thereby, the smartphone 20 can be connected to the access point 40. In the procedure shown in FIG. 9B(i), a two-dimensional code 61 displayed on the display unit 26 of the authenticated smartphone 20 is acquired by an imaging means (not shown in the figure) such as a camera installed on the PC 30, thereby inputting the SSID and the password to the PC 30. In addition, in the procedure shown in 9B(ii), the SSID and the password 62 displayed on the display unit 26 of the smartphone 20 are input to the PC 30 manually (namely, by character input via an input device 27 such as a keyboard). This enables the PC 30 to identify the SSID and the password for Wi-Fi. In these cases, it is desirable to limit time for displaying the two-dimensional code 61, the SSID and the password 62 on the display unit 26 of the authenticated smartphone 20 to a predetermined period of time (for example, about 60 to 120 seconds). By limiting the display time to the predetermined period of time in this way, it is possible to prevent the authentication information from leaking carelessly, and thus to secure the security of the wireless LAN.

As described above, the communication authentication apparatus 10 of the present embodiment includes the NFC circuit (NFC unit) 12 having the function of performing authentication for connecting the smartphone (communication device) 20 to the access point 40 by performing communication using NFC with the smartphone 20 by proximity or contact of the smartphone 20, the microcomputer module 11 having the CPU 14 for controlling the NFC circuit 12, and the power supply circuit 13 that supplies power to the system of the communication authentication apparatus 10 including the NFC circuit 12 and the microcomputer module 11 (CPU 14). And, when the power supply circuit 13 is in the complete power-off state or the power-saving state, the power supply circuit 13 is controlled to start from the complete power off state or the power saving state in response to the communication with the smartphone 20 in the NFC unit 12.

In the communication authentication apparatus 10 of the above-described configuration including the NFC circuit 12 having the function of performing authentication for connecting the smartphone 20 to the access point 40 of the wireless LAN by performing communication using NFC with the smartphone 20 by proximity or contact of the smartphone 20, when the power supply circuit is in the complete power-off state or the power-saving state, in the response to the communication with the smartphone 20 in the NFC circuit 12, the power supply circuit 13 is controlled to start from the complete power-off state or the power-saving state. This enables start-up of the power supply circuit 13 of the communication authentication apparatus 10 so as to supply power only when necessary, and accordingly enables effective reduction of power consumption of the communication authentication apparatus 10. In addition, since the power supply circuit 13 is configured to be activated in response to the communication of the NFC circuit 12, the authentication of the smartphone 20 can be performed quickly and reliably.

Moreover, the communication system 100 of the present embodiment includes the smartphone 20 and the communication authentication apparatus 10 that performs authentication for connecting the smartphone 20 to the access point 40 of the wireless LAN. The smartphone 20 includes the storage unit 25 that stores the application having a function for receiving authentication by the communication authentication apparatus 10, and a display unit 26 that performs a display related to the application. In addition, the communication authentication apparatus 10 includes the circuit 12 having the function of performing authentication for connecting the smartphone 20 to the access point 40 by performing communication using the NFC with the smartphone 20 by proximity or contact of the smartphone 20. The communication authentication apparatus 10 performs authentication for connecting the smartphone 20 to the access point 40 by performing communication using NFC with the smartphone 20 by proximity or contact of the smartphone 20. And, the authenticated smartphone 20 is configured to display the authentication information (namely, SSID and password) 62 of the access point 40 to which the smartphone 20 is connected or the two-dimensional code 61 including the authentication information on the display unit 26.

The communication system 100 of the above-described configuration is configured so that the authentication information 62 of the access point 40 to which the smartphone 20 is connected or the two-dimensional code 61 including this authentication information is displayed on the display unit 26 of the authenticated smartphone 20. This enables authentication for connecting the PC 30 as the other communication device to the access point 40 using the display of the authentication information 62 or the two-dimensional code 61 including this authentication information. In other words, when the authentication information 62 is displayed on the display unit 26 of the authenticated smartphone 20, the PC 30 can be authenticated by manually inputting the display of the authentication information 62 to the PC 30. When the two-dimensional code 61 including the authentication information is displayed on the display unit 26, the PC 30 can be authenticated by capturing the two-dimensional code 61 with a camera (imaging means) of the PC 30. Therefore, it is possible to securely authenticate the connection of the PC 30 to the access point 40 by a simple procedure.

### [Second embodiment]

Next, a second embodiment of the present invention will be described. In the description of the second embodiment and the corresponding drawings, components that are the same as or correspond to those of the first embodiment are denoted by the same reference numerals, and detailed description of those portions will be omitted below. Items other than those to be described below and those to be illustrated below are the same as those in the first embodiment. This also applies to the third and subsequent embodiments.

In the present embodiment, when a visitor of the store 200 places an order for a product or the like from their smartphone 20, the communication authentication apparatus 10 is configured to authenticate the transmission of order data from the smartphone 20. Therefore, in the present embodiment, whether or not the smartphone 20 is connected to the access point 40 in the wireless LAN environment in the store 200 does not directly affect the authentication. Hence, it is not necessarily essential for the smartphone 20 to connect to the wireless LAN access point 40 in the store 200 by the authentication of the communication authentication apparatus 10. On the other hand, the communication authentication apparatus 10 is connected to the access point 40 of the wireless LAN in the wireless LAN communication circuit 18, and to the server 50 on the Internet W via the wireless LAN. Therefore, an exchange of data between the smartphone 20 and the in-store computer 70, and an exchange of data between the communication authentication apparatus 10 and the in-store computer 70 are performed via the server 50.

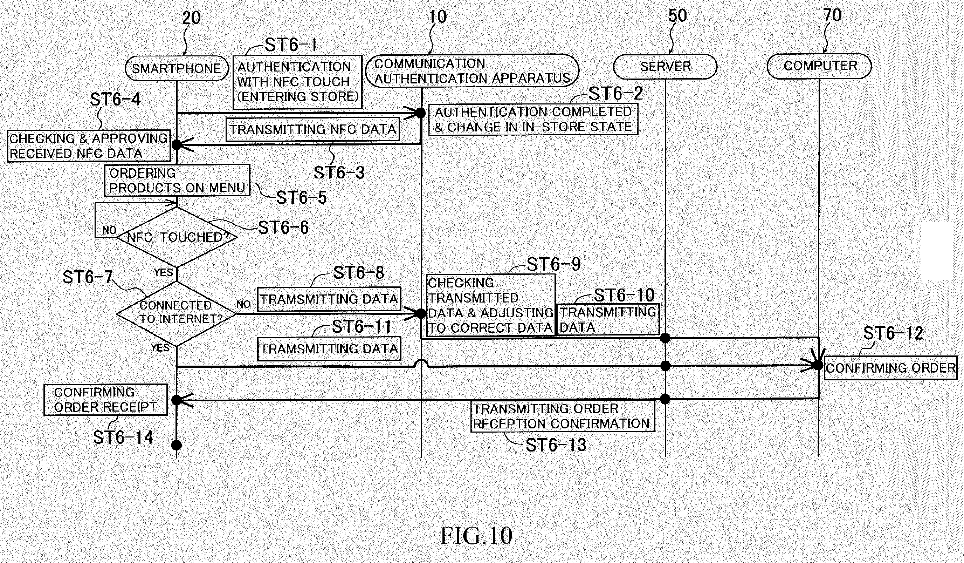

A processing in which a visitor (customer) of the store 200 sends order information of a product or the like to the computer 70 of the store operator using their smartphone 20 will be described. FIG. 10 is a flowchart for illustrating a procedure of this processing. Here, first, when the visitor enters the store 200, authentication is performed by touching the smartphone 20 to the NFC circuit 12 of the communication authentication apparatus 10 (namely, by performing the NFC touch) (ST6-1). The communication authentication apparatus 10 authenticates the smartphone 20 by the NFC touch and recognizes that the smartphone 20 is in the store (ST6-2). Following this, NFC data is transmitted from the communication authentication apparatus 10 to the smartphone 20 (ST6-3). The smartphone 20 receives the transmitted NFC data, and then checks and approves the received NFC data (ST6-4).

In addition, by performing the above-described authentication, the communication authentication apparatus 10 and the computer 70 of the store operator can transmit store information (for example, information on recommended products and services of the day) to the visitor's smartphone 20 via the Internet W or the like. Further, the communication authentication apparatus 10 can identify the visitor who owns the smartphone 20 based on the information obtained from the visitor's smartphone 20 at the time of authentication. Based on this information, the computer 70 of the store operator can grasp a past visit history of the visitor, a purchase history of products, and the like. Therefore, the content (information) to be transmitted as described above can be varied for each visitor according to their visit history or purchase history.

Thereafter, the visitor inputs order information such as a product with the authenticated smartphone 20 (namely, performs an order) (ST6-5). The input of the order information of the product or the like is performed by, for example, selecting a desired product from a list menu displayed on the display screen of the smartphone 20. After that, it is determined whether or not the NFC touch of the smartphone 20 to the communication authentication apparatus 10 has been performed (ST6-6). As a result, if the NFC touch is not performed (NO), the processing waits until the NFC touch is performed, and proceeds to subsequent steps only when the NFC touch is performed (YES). Then, when the NFC touch is performed, if the smartphone 20 is not connected to the Internet (communication network) W (NO in ST6-7), the order data is transmitted from the smartphone 20 to the communication authentication apparatus 10 (ST6-8). Data transmission and reception at this time is performed via the wireless LAN communication circuit 24, 18. The communication authentication apparatus 10 that has received the transmitted order data checks the transmitted order data and adjusts it (if necessary) to correct data (ST6-9). Checking and adjusting the order data here means, for example, confirming that the order data transmitted by the sender (such as fee data, orderer information, etc.) has not been improperly falsified, and in the event that such falsification has been found, correcting the order data to correct data. Thereafter, the checked and adjusted order data is transmitted from the communication authentication apparatus 10 to the store operator's computer 70 via the server 50 on the Internet W (ST6-10). Data transmission by the communication authentication apparatus 10 at this time is performed via the wireless LAN communication circuit 18. On the other hand, when the smartphone 20 is connected to the Internet W in the previous ST6-7 (YES in ST6-7), the order data is transmitted from the smartphone 20 directly through the server 50 via the Internet W to the computer 70 of the operator (ST6-11). The store operator's computer 70 receives the order data transmitted through any of the above-described routes and accordingly confirms the order (ST6-12). Thereafter, the store operator's computer 70 transmits an order receipt confirmation to the visitor's smartphone 20 via the server 50 (ST6-13). Upon receiving the order receipt confirmation, the smartphone 20 confirms with this reception that the order has been successfully received (ST6-14). When there is an order again, the above-described processing from ST6-5 to ST6-14 is repeated.

As described above, the communication system 100 according to the second embodiment includes the smartphone 20 and the communication authentication apparatus 10 that authenticates data transmitted from the smartphone 20. The communication authentication apparatus 10 includes the NFC circuit (first communication unit) 12 having the function of authenticating data transmitted from the smartphone 20 by performing communication using NFC with the smartphone 20 by proximity or contact of the smartphone 20, and the wireless LAN communication circuit 18 for performing another wireless communication using a communication method different from that of the NFC circuit 12. The NFC circuit 12 of the communication authentication apparatus 10 authenticates data transmitted from the smartphone 20 by performing communication using NFC with the smartphone 20 by proximity or contact of the smartphone 20. The data transmitted from the smartphone 20 that has been authenticated by the communication authentication apparatus 10 is transmitted from the wireless LAN communication circuit 18 of the communication authentication apparatus 10 through the access point 40 via the server 50 on the Internet W to the store operator's computer (namely, communication device for reception) 70.

The communication system 100 of the present embodiment is configured so that the data transmitted from the smartphone 20 authenticated by the communication authentication apparatus 10 is transmitted from the wireless LAN communication circuit 18 of the communication authentication apparatus 10 to the store operator's computer 70 via the server 50 on the Internet W through the access point 40. This enables transmission only of the information permitted (authenticated) by the communication authentication apparatus 10 out of the data transmitted from the smartphone 20 to the computer 70 of the store operator, which is another communication device. In other words, for example, in a store such as a restaurant, a visitor (customer) of the store inputs information related to their order by operating a communication device such as their own smartphone 20. In that case, the data related to the order can be transmitted to the computer 70 of the store operator only when the visitor brings the smartphone 20 close to or in contact with the communication authentication apparatus 10 (NFC touch). Further, at this time, the data transmitted from the smartphone 20 is transmitted to the store operator's computer 70 via the communication authentication apparatus 10. This can prevent transmission of the transmitted data if the transmitted data is improperly falsified, and can transmit the data after being appropriately corrected. As a result, it is possible for the visitor to safely and reliably place an order from their own smartphone 20 or the like, and the store operator can safely and properly receive the order from visitor's the smartphone 20 or the like.

### [Third embodiment]

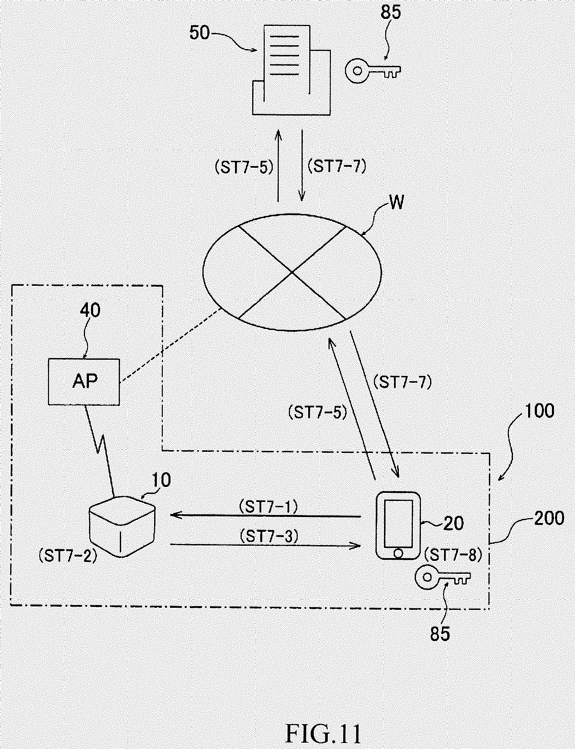

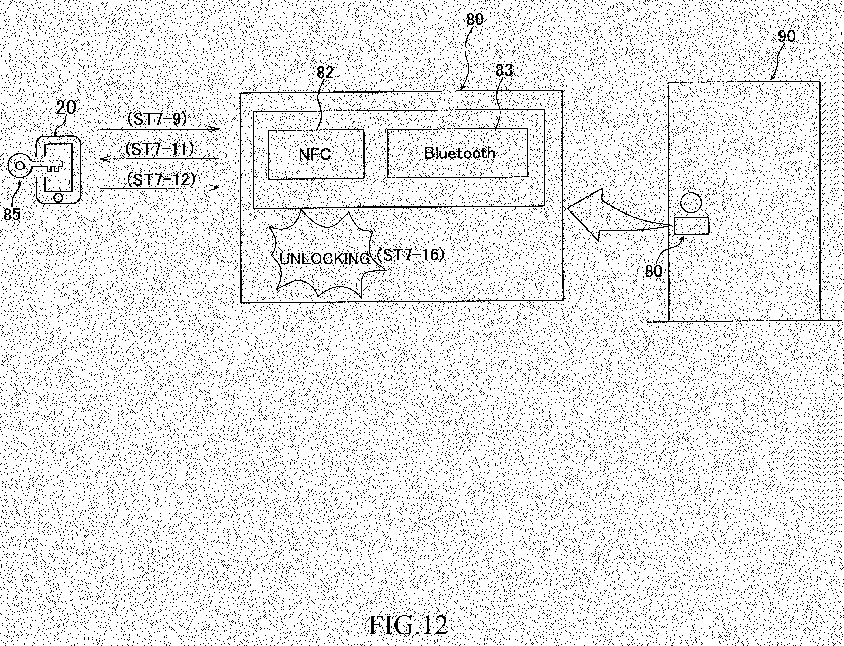

Next, a third embodiment of the present invention will be described. FIGs. 11 and 12 are diagrams for illustrating a procedure of the third embodiment. In the present embodiment, a store visitor can use their smartphone 20 so as to unlock a locking device 80 provided on a door 90 of the room in the store. As a procedure for this, the store visitor authenticates their smartphone 20 with the communication authentication apparatus 10, based on this authentication, receives (downloads) key data (so-called, a key as electronic data) 85 required to unlock the locking device 80 on the smartphone 20 from the server 50 via the Internet W, and then unlocks the locking device 80 using the received key data 85. Hereinafter, this will be described in detail.

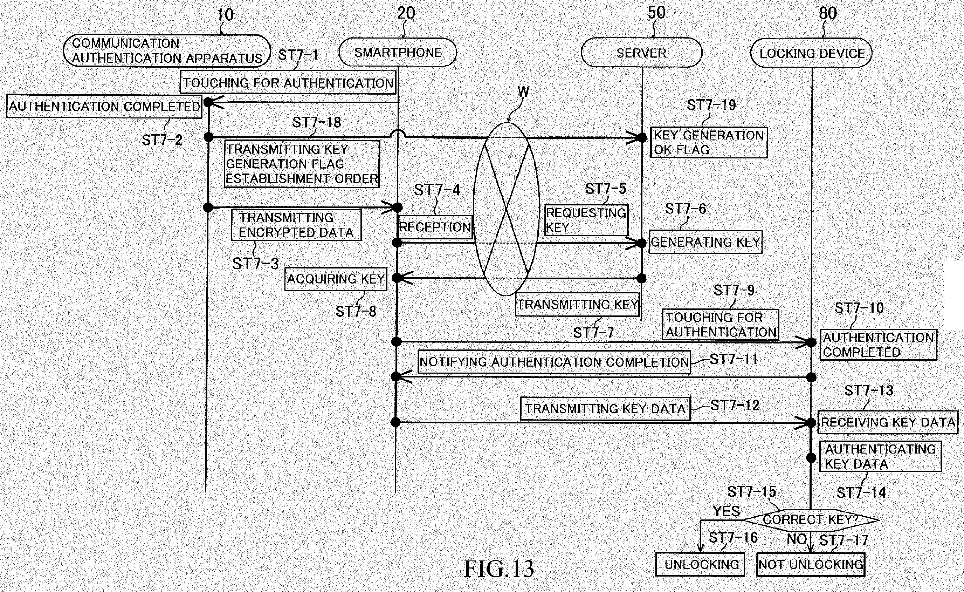

FIG. 13 is a flowchart illustrating the procedure of the present embodiment. The step numbers shown in FIGs. 11 and 12 correspond to those shown in the flowchart of FIG. 13. In the flowchart of FIG. 13, first, the store visitor touches the communication authentication apparatus 10 with their own smartphone 20 for authentication (ST7-1). Thus, the communication authentication apparatus 10 completes the authentication of the smartphone 20 (ST7-2). Upon completion of the authentication, a command to establish a flag permitting generation of key data 85, which will be described later, is transmitted from the communication authentication apparatus 10 to the server 50 (ST7-18). This command is transmitted using a value generated when the authentication is completed in ST7-2. Then, in the server 50 receiving the command, a generation flag (generation OK flag) of the key data 85 is set (ST7-19). Note that ST7-18 and ST7-19 are not essential steps and hence omissible. In other words, when the specification of generating the key data 85 without setting the flag in ST7-19 is adopted, ST7-18 and ST7-19 are omissible. Thereafter, encrypted data is transmitted from the communication authentication apparatus 10 to the smartphone 20 (ST7-3). The smartphone 20 receives the encrypted data (ST7-4). Then, by transmitting the received encrypted data to the server 50 via the Internet W, the key data 85 of the locking device 80 is requested (ST7-5). Upon receiving the request for key data 85, the server 50 generates the key data 85 based on the encrypted data (ST7-6). The key generation here is performed under the condition that the flag is set if the generation flag of the key data 85 has been set in the previous step ST7-19 (if the specification for setting the flag is adopted). Then, the generated key data 85 is transmitted to the smartphone 20 via the Internet W (ST7-7). Thus, the key data 85 is stored (acquired) in the smartphone 20 (ST7-8).

Thereafter, the visitor touches the locking device 80 provided on the door 90 or the like so as to authenticate the smartphone 20 (ST7-9). Thereby, the authentication of the smartphone 20 is completed by the locking device 80 (ST7-10), and the completion of the authentication is notified from the locking device 80 to the smartphone 20 (ST7-11). Here, as shown in FIG. 12, the locking device 80 includes an NFC unit 82 and a Bluetooth communication circuit 83. The procedure of authentication of the smartphone 20 using the locking device 80 from ST7-9 to ST7-11 is performed through NFC wireless communication by the NFC unit 82. After this authentication is completed, the smartphone 20 subsequently transmits the key data 85 to the locking device 80 (ST7-12), and the locking device 80 receives the transmitted key data 85 (ST7-13). The transmission of the key data 85 from the smartphone 20 to the locking device 80 and the reception of the key data 85 by the locking device 85 are performed through wireless communication using a Bluetooth communication method with the Bluetooth communication circuit 83 of the locking device 85. Thereafter, the locking device 85 authenticates the key data 85 (ST7-14). The authentication of the key data 85 by the locking device 80 may be performed with the server 50 via the Internet W, or may be performed by an authentication method built in the locking device 85. As a result of this authentication, if it is determined that the key data 85 is correct (YES in ST7-15), the locking device 85 is unlocked (ST7-16). And, if it is determined that the data is not correct (NO in ST7-15), the locking device 85 is not unlocked (ST7-17).

As described above, in the present embodiment, the door 90 and the like can be unlocked using the smartphone 20 that has been authenticated by touching the communication authentication apparatus 10, thereby enabling further improvement of convenience for shop visitors and the like. In the above description, the case where the locking device 80 is unlocked by the smartphone 20 storing the key data 85 has been described. However, the locking may be performed in addition thereto. In the above-described embodiment, the case where the locking device 80 is attached to the door 90 of the room in the store has been described. However, the locking device 80 may be attached to something that needs to be locked/unlocked, for example, a box (safe or storage box). Alternatively, the key data of the present embodiment can be used not only for unlocking and locking the locking device, but also for starting a computer or a device (for example, a game device). Also, in this case, when a user having the smartphone 20 enters the room and locks the door 90 (namely, the locking device 80) of the room, the smartphone 20 may be automatically connected to the Wi-Fi in the room by transmitting information on the Wi-Fi in the room from the locking device 80 to the smartphone 20.

### [Fourth embodiment]

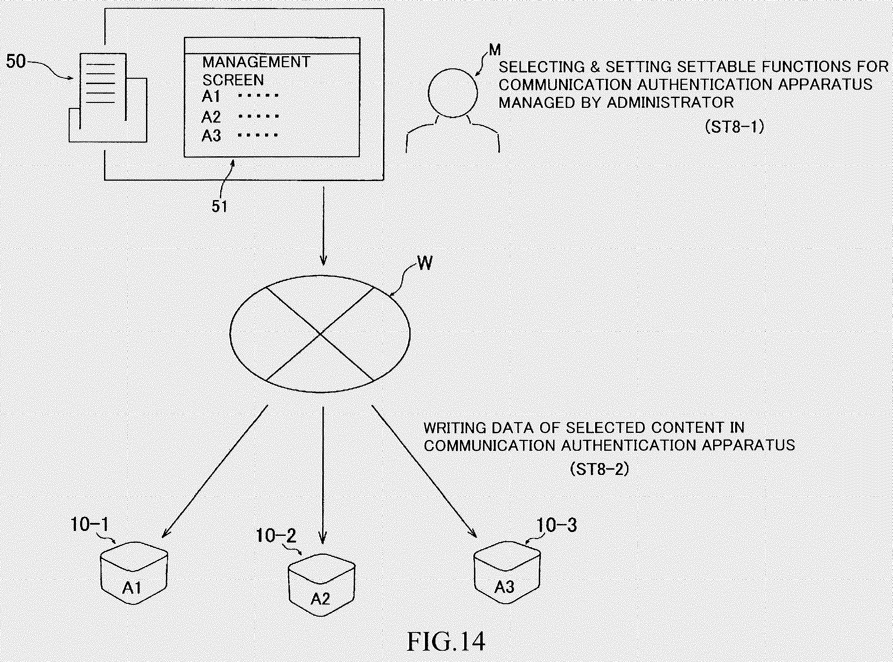

Next, a fourth embodiment of the present invention will be described. FIG. 14 illustrates a procedure of the fourth embodiment. In the present embodiment, functions that can be set by the authentication device 10 managed by an administrator of the communication authentication apparatus 10 are selected and set (determined). The administrator here may be an owner of the communication authentication apparatus 10 or an operator of the store where the communication authentication apparatus 10 is installed. And, the functions here are services that can be used by a user such as the store operator who uses the communication authentication apparatus 10. As an operation for this, data setting (writing) can be performed for a plurality of communication authentication apparatuses 10 (10-1, 10-2, 10-3 ...) collectively from a management screen 51 provided to the server 50. In this case, the plurality of communication authentication apparatuses 10 (10-1, 10-2, 10-3 ...) may be installed respectively in different stores or the like in addition to those installed in the same store or the like.

The functions that can be set in the communication authentication apparatus 10 here include, for example, the following.
Check-in: Whether the person entered the place.
Checkout: Whether the person has left the place.
Membership management: Who performed a particular action on that place (such as using contents of a device provided therein).
Product order: To purchase a product from a specific display menu.
URL Display: URL information held by the touched place.
Authentication: Matching key information of the touching terminal.
Information acquisition: Displaying information related to a store or the like on the touching smartphone 20.

In other words, the administrator M displays management information of the communication authentication apparatus 10 (10-1, 10-2, 10-3...) on the management screen 51 of the server 50, and in this state, selects the functions that can be set by the communication authentication apparatus 10 and operates the setting (ST8-1). Thus, the selected data is set (written) in the ROM 15 or the like via the NFC circuit 12 in the corresponding communication authentication apparatus 10 (10-1, 10-2, 10-3 ...) (ST8-2).

As described above, according to the present embodiment, since the selection and setting operation of the functions that can be set for the plurality of communication authentication apparatuses 10 (10-1, 10-2, 10-3 ...) can be collectively performed, management of the plurality of communication authentication apparatuses 10 (10-1, 10-2, 10-3 ...) is facilitated, and in addition the convenience thereof is improved. In this embodiment, in addition to the selection and setting of the functions that can be set in the communication authentication apparatus 10 (10-1, 10-2, 10-3...), batch updating of a firmware of the communication authentication apparatus 10 (10-1, 10-2, 10-3...), and collective acquisition of current information such as detection values of a temperature/humidity sensor held by the communication authentication apparatus 10 (10-1, 10-2, 10-3 ...) are performable on the management screen 51 of the server 50.

As described above, the embodiments of the present invention have been described. However, the present invention is not limited to the above-described embodiments, and various modifications may be made within the scope of the claims and the technical idea described in the specification and the drawings.

## Claims

1. A communication authentication apparatus for performing authentication for connecting a communication device to an access point of a wireless LAN, the communication authentication apparatus comprising:
an NFC unit having a function of performing authentication for connecting the communication device to the access point by communication using NFC with the communication device by proximity or contact of the communication device;
a control unit controlling the NFC unit; and
a power supply circuit supplying power to a system of the communication authentication apparatus including the NFC unit and the control unit,
wherein when the power supply circuit is in a complete power-off state or a power-saving state, the control unit controls to start up the power supply circuit from the complete power-off state or the power-saving state in response to a fact that in the NFC unit, communication is performed with the communication device.

2. A communication system comprising:
a communication device; and
a communication authentication apparatus performing authentication for connecting the communication device to an access point of a wireless LAN,
wherein the communication device comprises:
a storage unit storing an application having a function for receiving authentication by the communication authentication apparatus; and
a display unit performing a display related to the application,
wherein the communication authentication apparatus comprises an NFC unit having a function of performing authentication for connecting the communication device to the access point by performing communication using NFC with the communication device by proximity or contact of the communication device,
wherein the communication authentication apparatus performs authentication for connecting the communication device to the access point by performing communication using NFC with the communication device by proximity or contact of the communication device, and
wherein the authenticated communication device displays on the display unit authentication information of the access point to which the communication device is connected, or displays image data including the authentication information,

3. The communication system according to claim 2, wherein the display of the authentication information of the access point or the display of the image data including the authentication information is performed only for a predetermined period of time.

4. A communication system comprising:
a communication device; and
a communication authentication apparatus performing authentication of data transmitted from the communication device,
wherein the communication authentication apparatus comprises:
a first communication unit having a function of performing authentication of the data transmitted from the communication device by performing communication using NFC with the communication device by proximity or contact of the communication device; and
a second communication unit performing another wireless communication using a communication method different from the first communication unit,
wherein the first communication unit of the communication authentication apparatus performs authentication of data transmitted from the communication device by performing communication using NFC with the communication device by proximity or contact of the communication device, and
wherein the data transmitted from the communication device authenticated by the communication authentication apparatus is transmitted to another receiving communication device via the second communication unit of the communication authentication apparatus.

5. A communication system comprising a communication authentication apparatus performing authentication of data transmitted from the communication device,
wherein the communication authentication apparatus comprises:
a first communication unit having a function of authenticating the data transmitted from the communication device by performing communication using NFC with the communication device by proximity or contact of the communication device; and
a second communication unit performing another wireless communication using a communication method different from the first communication unit,
wherein the first communication unit of the communication authentication apparatus performs authentication of data transmitted from the communication device by performing communication using NFC with the communication device by proximity or contact of the communication device, and
wherein the communication device authenticated by the communication authentication apparatus is configured to receive key data of a locking device from a server by transmitting the authentication information to the server via a communication network, and lock/unlock the locking device by transmitting the received key data to the locking device using communication by the second communication unit.

## Amended claims

### Amended claims under Art. 19.1 PCT

1. A communication system:
comprising a communication device; and
a communication authentication apparatus performing authentication for connecting the communication device to an access point of a wireless LAN,
wherein the communication device comprises a storage unit storing an application having a function for receiving authentication by the communication authentication apparatus,
wherein the communication authentication apparatus comprises an NFC unit performing communication using NFC with the communication device by proximity or contact of the communication device,
wherein the communication authentication apparatus performs authentication for connecting the communication device to the access point by performing communication using NFC with the communication device by proximity or contact of the communication device, and transmits encrypted data to the communication device, and
wherein the authenticated communication device decrypts the data received from the communication authentication apparatus, and connects to the access point by acquiring from the decrypted data authentication information of the access point to which the communication device is connected.

2. The communication system according to claim 1, further comprising a display unit performing a display related to the application,
wherein the authenticated communication device displays on the display unit authentication information on an access point to which the communication is connected or image data including the authentication information.

3. The communication system according to claim 2, wherein a display of authentication information of the access point or a display of image data including authentication information is performed for a predetermined period of time.

4. A communication system comprising:
a communication device; and
a communication authentication apparatus performing authentication of the communication device,
wherein the communication authentication apparatus comprises:
a first communication unit performing communication using NFC with the communication device by proximity of contact of the communication device; and
a second communication unit performing another wireless communication using a communication method different form the first communication unit,
wherein the first communication unit of the communication authentication apparatus performs authentication of the communication device by performing communication using NFC with the communication device by proximity or contact of the communication device, and transmits encrypted data to the communication device,
wherein the authenticated communication device decrypts data received from the communication device, thereby becoming ready to transmit another data to the communication device using the decrypted data, and
wherein the other data transmitted from the communication device authenticated by the communication authentication apparatus is configured to be transmitted to another receiving communication device via the second communication unit of the communication authentication apparatus.

5. The communication system according to claim 4,
wherein the other data is data related to an order in a store where the communication authentication apparatus is installed, and
wherein the communication authentication apparatus checks the data related to the order transmitted from the authenticated communication device, if necessary adjusts the data to correct data, and transmits the corrected data via the second communication device to a terminal device of an operator of the store as the other communication device.

6. A communication system comprising: a communication device and a communication authentication apparatus performing authentication of the communication device,
wherein the communication authentication apparatus comprises:
a first communication unit performing communication using NFC with the communication device by proximity or contact of the communication device; and
a second communication unit performing communication performing another wireless communication using a communication method different from the fist communication unit,
wherein the first communication unit of the communication authentication apparatus performs authentication of the communication device by performing communication using NFC with the communication device by proximity or contact of the communication device, and transmits encrypted data to the communication device, and
wherein the communication device authenticated in the communication authentication apparatus is configured to decrypt the data received from the communication authentication apparatus, transmit the decrypted data to a sever via a communication network, thereby receiving key data of a locking device from the server, and transmit the received key data using communication by the second communication unit, thereby locking/unlocking the locking device.

7. A communication system: comprising
a communication device; and
a communication authentication apparatus performing authentication of the communication device,
wherein the communication device comprises a storage unit storing an application having a function for receiving authentication by the communication authentication apparatus,
wherein the communication authentication apparatus comprises an NFC unit performing communication using NFC with the communication device by proximity or contact of the communication device,
wherein the communication authentication apparatus performs communication using NFC with the communication device by proximity or contact of the communication device, thereby performing authentication of the communication device, and transmits encrypted data to the communication device, and
wherein the authenticated communication device decrypts the data received from the communication authentication apparatus, thereby becoming ready to transmit data related to an order in a store where the communication authentication apparatus is installed to a terminal device of a store operator using the decrypted data.
